# EUROPÄISCHE PATENTSCHRIFT

(11) **EP 1 948 468 B1**
(45) Veröffentlichungstag und Bekanntmachung des Hinweises auf die Patenterteilung: **21.01.2015**
(21) Anmeldenummer: 06828850.5
(22) Anmeldetag: 21.10.2006
(51) Int. Cl.: B60M 1/30, B60L 5/00

(54) **SYSTEM ZUM HALTEN VON KABELN**
SYSTEM FOR HOLDING CABLES
SYSTEME POUR MAINTENIR DES CABLES

(30) Priorität: 08.11.2005 DE 102005053549
(43) Veröffentlichungstag der Anmeldung: 30.07.2008
(73) Patentinhaber: SEW-EURODRIVE GmbH & Co. KG, 76646 Bruchsal (DE)
(72) Erfinder: BECKER, Günter, 76684 Östringen (DE); WOLF, Konstantin, 76698 Ubstadt-Weiher (DE); SCHWESINGER, Klaus, D-76646 Bruchsal (DE)
(86) Internationale Anmeldenummer: PCT/EP2006/010173
(87) Internationale Veröffentlichungsnummer: WO 2007/054200

(56) Entgegenhaltungen:
- EP-A1- 0 451 316
- DE-A1- 2 850 096
- FR-A1- 2 594 267
- FR-A1- 2 860 756
- JP-A- 2000 118 269

## Beschreibung

Die Erfindung betrifft ein System zum Halten von Kabeln

Aus der DE 10014954 und der DE 10147859 ist ein System zur berührungslosen Energieübertragung bekannt, bei dem mittelfrequente Starkströme im Primärleiter vorgesehen sind und Leistungen von mehr als 1 kW an bewegbar angeordnete Verbraucher übertragbar sind.

Die JP 2000 118269 A zeigt ein System nach dem Oberbegriff des Anspruchs 1 der vorliegenden Erfindung.

Der Erfindung liegt daher die Aufgabe zugrunde, ein System zum Halten von Kabeln weiterzubilden, wobei die Installation möglichst einfach, schnell und kostengünstig ausführbar sein soll.

Erfindungsgemäß wird die Aufgabe bei dem System nach den in Anspruch 1 angegebenen Merkmalen gelöst.

Wichtige Merkmale der Erfindung bei dem System sind, dass es zum Halten von Kabeln vorgesehen ist, wobei Kabel in Kabelkanälen vorsehbar sind,
wobei die Kabelkanäle formschlüssig mit Kabelkanalhaltern verbindbar sind,
wobei die Kabelkanalhalter mit einer Profilschiene verbindbar sind.

Besonders geeignet ist das System bei einem System zur berührungslosen Energieübertragung.

Von Vorteil ist dabei, dass Werkzeuge nicht gebraucht werden mit Ausnahme eines Schraubendrehers zum Drehen von Drehrastern. Durch die Verriegelung ist die Sicherheit erhöht. Außerdem entfällt Bohren und Schrauben.

Von Vorteil ist dabei, dass Profilschienen verwendbar sind, die zwei parallele Oberflächenbereiche aufweisen, die einander zugewandt sind und der Verbindungszwischenraum zwischen diesen beiden Oberflächenbereichen verfügbar ist zum Einbringen der Kabelkanalhalter.

Somit ist in die Profilschiene nur ein einfaches Teil, nämlich der Kabelkanalhalter, einzubringen und schon ist die Profilschiene in der Lage mit Kabelkanälen zum Einlegen von Primärleitern eines berührungslosen Energieübertragungssystems ausgestattet zu werden. Das Verlegen der Primärleiter ist somit äußerst einfach. Der Primärleiter ist somit entlang der Schiene angeordnet und die an der Profilschiene bewegbar angeordneten Verbraucher bewegen eine Sekundärspule mit sich, die induktiv gekoppelt ist an den Primärleiter. Somit ist Energie an die Verbraucher induktiv, also auch berührungslos, übertragbar. In Weiterbildung ist auch Information bidirektional übertragbar, indem diese als höher frequente Signale auf den Primärleiterstrom aufmoduliert wird.

Bei einer vorteilhaften Ausgestaltung ist die Profilschiene eine EHB-Schiene. Von Vorteil ist dabei, dass solche Schienen die genannten Oberflächenbereiche schon aufweisen und somit nachrüstbar sind. Somit sind aber Einschienenhängebahnen (EHB) nachrüstbar auf berührungslose Energieversorgung. Schleifleitungen sind einsparbar und somit auch funkenfreie Energieübertragung an bewegbar angeordnete Verbraucher ermöglicht.. Daher ist auch eine Anlage im explosionsgeschützten Bereich mit dieser berührungslosen Energieübertragungstechnik ausstattbar.

Bei einer vorteilhaften Ausgestaltung sind die Kabelkanalhalter mit der Profilschiene durch Drehbewegung in einen formschlüssigen Verbindungszustand mit der Profilschiene bringbar. Von Vorteil ist dabei, dass dies werkzeuglos erfolgen kann und somit die Verbindung in einfacher Weise schnell erfolgt.

Bei der Erfindung stehen die Kabelkanalhalter mittels zweier gegenüberliegenden Oberflächenbereichen, insbesondere Berührkonturen, mit Nutgründen von Nuten der Profilschiene in Berührung. Von Vorteil ist dabei, dass der Kabelkanalhalter nicht herausrutschbar angeordnet ist und somit gesichert ist. Insgesamt ist er nach dem Verbinden formschlüssig gesichert und verbunden.

Bei einer vorteilhaften Ausgestaltung ist der jeweilige Oberflächenbereich gerade ausgeführt, insbesondere flach, und benachbarte Bereiche derart ausgeführt sind, dass bei der Drehbewegung des Kabelkanalhalters dieser gerade Bereich im Wesentlichen gleichzeitig zum Anliegen am Nutgrund kommt. Insbesondere umfassen die Kabelkanalhalter jeweils Drehraster, die verriegelbar sind. Von Vorteil ist dabei, dass beim Drehbewegen ein Einschnappen zu verspüren ist, wenn der gerade Oberflächenbereich im Wesentlichen gleichzeitig zum Eingriff kommt. Damit wird ein unbeabsichtigtes Lösen verhinderbar.

Bei einer vorteilhaften Ausgestaltung umfassen die Kabelkanalhalter jeweils Drehraster, die mittels Drehbewegung ein Auslenken von Rastern der Kabelkanalhalter bewirken. Von Vorteil ist dabei, dass das Verbinden der Kabelkanäle mit den Rastern der Kabelkanalhalter werkzeuglos und einfach ermöglicht ist. Durch das Drehen der Drehraster ist dann die Verbindung verriegelt, da die Raster etwas ausgelenkt werden und somit ein Lösen der Kabelkanäle nur schwer oder mit Zerstörung ermöglicht ist. Die Kabelkanäle sind also sicher gehalten und fixieren das Primärleiterkabel in ihrer Aufnahme. Somit wird sicher gestellt, dass der Primärstrom sich in einem definierten Raumbereich befindet, entlang dessen die Sekundärspule zu bewegen ist. Dies erfolgt vorzugsweise mit einem definierten Abstand.

Bei der Erfindung umfassen die Kabelkanalhalter jeweils Raster, in welche die Kabelkanäle einklipsbar sind. Von Vorteil ist dabei, dass mit pilzkopfförmigen Ausprägungen und entsprechenden Rastnasen das Einrasten oder Einklipsen in einfacher Weise und schnell ausführbar ist. Die Kabelkanäle sind dann sicher, stabil und fest gehalten in einem wohldefinierten Bereich.

Bei einer vorteilhaften Ausgestaltung sind Primärleitungen in die Kabelkanäle formschlüssig einlegbar und gehalten. Von Vorteil ist dabei, dass die Leitungen nicht herausrutschen können und sich stets in ihrem Raumbereich befinden.

Bei einer vorteilhaften Ausgestaltung sind Kabelkanäle, Kabelkanalhalter und Drehraster aus Kunststoff, wobei die Profilschiene aus Metall gefertigt ist, insbesondere aus Strangpressguss oder Aluminium Strangpressguss. Von Vorteil ist dabei, dass eine kostengünstige Fertigung der Teile ermöglicht ist. Die anderen Teile sind als Kunststoffspritzgussteile herstellbar. Alternativ sind sie auch als Kunststoffziehteile oder extrudierte Teile herstellbar.

Bei einer vorteilhaften Ausgestaltung sind mittels der Drehraster zwei aufeinander folgende Raster gegeneinander derart verspannbar, dass die form- und/oder kraftschlüssig mit den Rastern verbundenen Kabelkanäle in den Rastern der Kabelkanalhalter formschlüssig gehalten sind. Von Vorteil ist dabei, dass die Verspannung eine sehr stabile Verbindung bewirkt.

Bei einer vorteilhaften Ausgestaltung sind die Drehraster verrastbar an einem Vorsprung, insbesondere Nase, der Raster. Von Vorteil ist dabei, dass Verspannungskraft durch die Dimensionierung und Ausformung wohldefiniert festlegbar ist.

Bei einer vorteilhaften Ausgestaltung führen die Primärleiter mittelfrequenten Wechselstrom. Von Vorteil ist dabei, dass hohe Leistungen übertragbar sind und die Wechselströme mittels elektronischer Leistungshalbleiter, wie IGBT, einfach und kostengünstig herstellbar sind.

Bei einer vorteilhaften Ausgestaltung übersteigt der mittelfrequente Wechselstrom 10 Ampere und eine Frequenz zwischen 10 und 100 kHz auf. Von Vorteil ist dabei, dass industrielle Antriebe mit mehr als 1 kW berührungslos versorgbar sind und Starkstrom induktiv übertragbar ist, insbesondere bei einer schwachen Kopplung, also einer gegenüber Transformatoren deutlich verringerten Kopplung.

Die Erfindung wird nun anhand von Abbildungen näher erläutert:

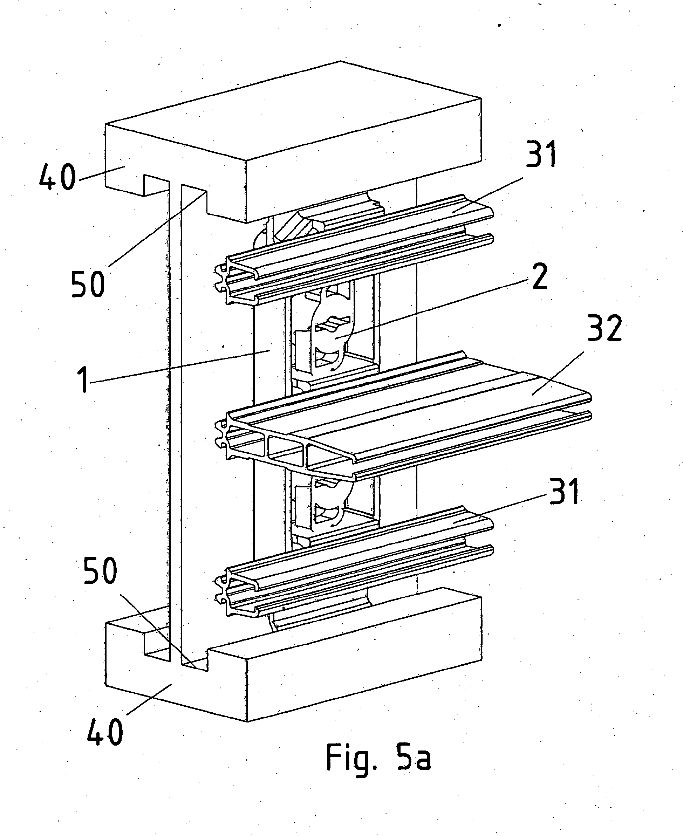

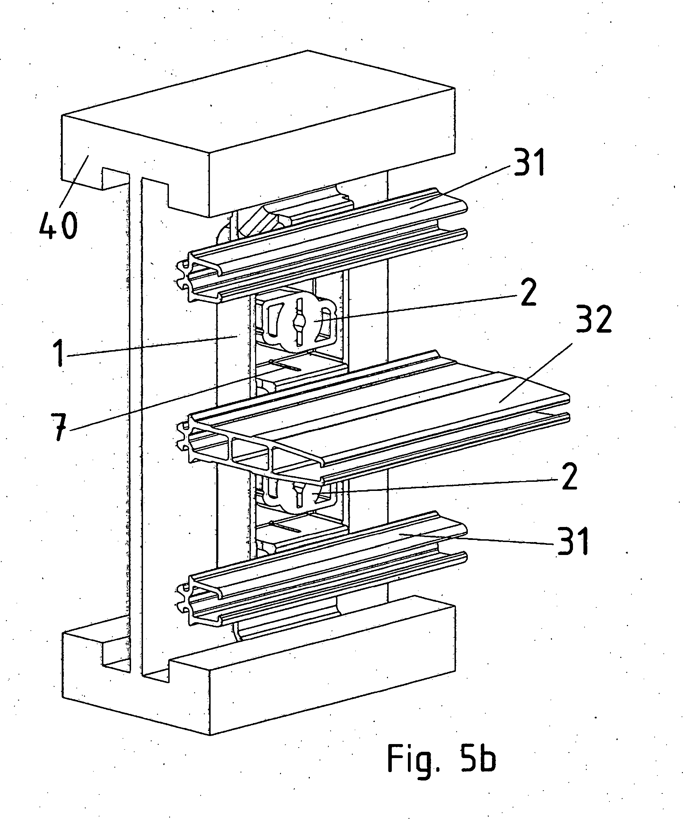

In der Figur 5a ist eine erfindungsgemäße Vorrichtung in Schrägansicht gezeichnet. Dabei ist die Profilschiene 40 beliebig. Beispielhaft ist eine EHB-Schiene als Profilschiene 40 verwendbar. Somit ist das erfindungsgemäße System auch bei einer vorhandenen Einschienenhängebahn (EHB) einsetzbar.

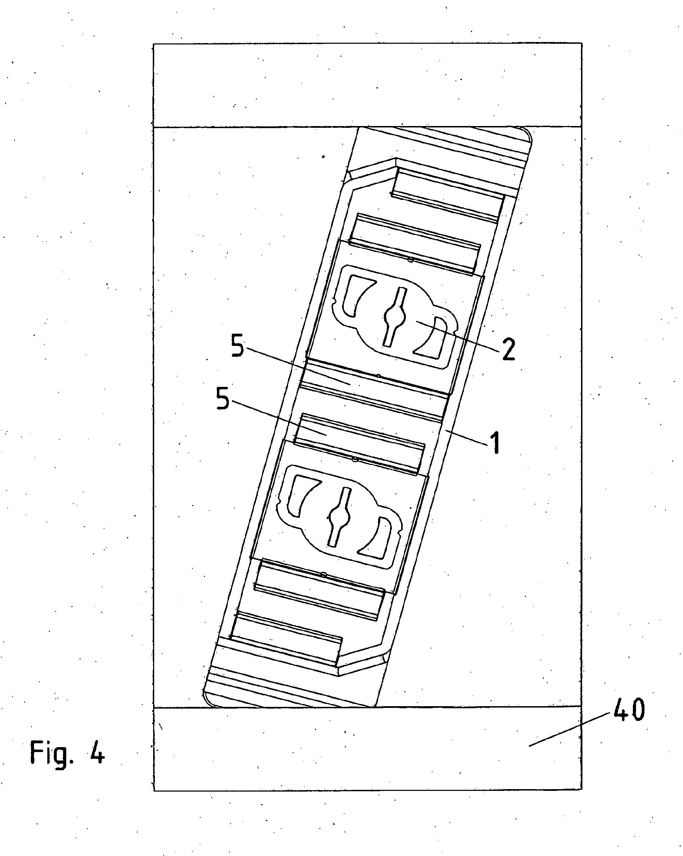

Zwischen zwei Nuten 50 wird der Kabelkanalhalter 1 vorgesehen, indem er drehend darin befestigt wird, wie dies in Figur 4 angedeutet ist.

Dann werden die Kabelkanäle (31,32) in die Raster 5 eingeführt und danach werden die Drehraster 2 verdreht und eingerastet. Dadurch werden die Raster 5 zum Halten der Kabelkanäle (31,32) verspannt.

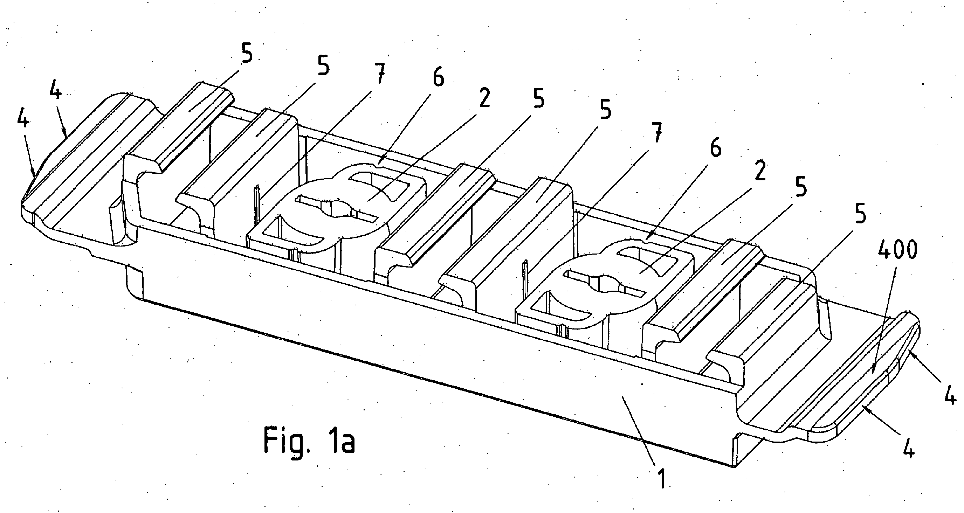

In der Figur 1a ist der Kabelkanalhalter 1 gezeigt.

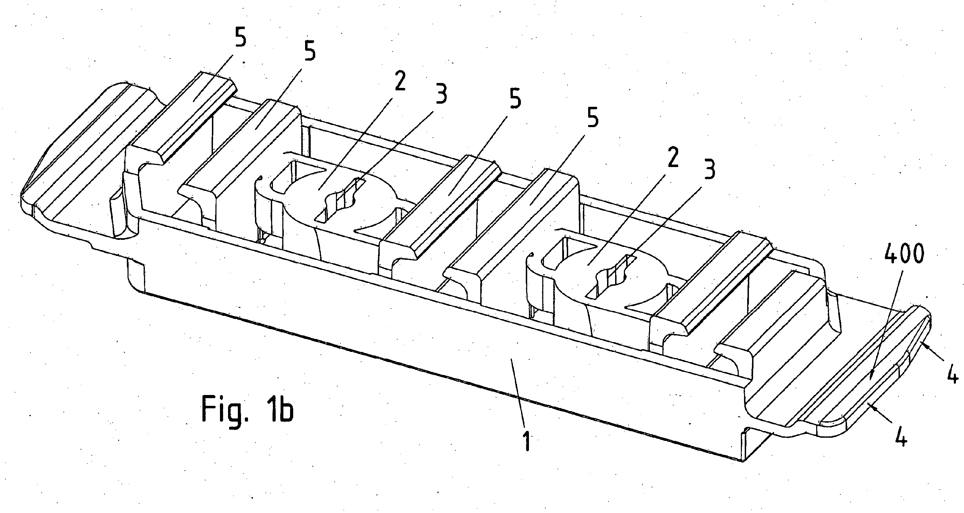

In der Figur 1b ist der Kabelkanalhalter 1 gezeigt, wobei der Drehraster 2 derart verdreht ist, dass zumindest eine Kerbe 6 in eine Nase 7 des Rasters 5 einschnappt. Vorteiligerweise befinden sich zwei gegenüberliegende Kerben 6 am Drehraster, die in entsprechende Nasen 7 der benachbarten Raster 5 einschnappbar sind. Dabei ist der Drehraster 2 derart dimensioniert, dass eine Verspannung, also ein Druck, auf die Raster 5 ausgeübt wird und der Abstand zwischen zwei zusammen gehörenden Rastern sinkt. Das Drehen des Drehrasters 2 ist mit einem Schraubendreher ausführbar, der in den Schlitz 3 einführbar ist.

Die Berührkontur 4 ist derart ausgeführt, dass der Kabelkanalhalter 1 in der Profilschiene 40, insbesondere in den Nuten der Profilschiene 40 formschlüssig gehalten ist. Hierzu ist die Berührkontur 4 derart ausgeführt, dass ein gerader Teil nach Ausführung der Drehbewegung an mindestens einer Wand der Profilschiene anliegt. In diesem Zustand ist eine Verspannung vorhanden, so dass der aus Kunststoff gefertigte Kabelkanalhalter 1 in der metallischen Profilschiene gehalten ist.

Die Verspannung erfolgt durch die Fläche 4.

Bei weiteren erfindungsgemäßen Ausführungsbeispielen ist die Profilschiene nicht-metallisch ausgeführt.

Die Berührkontur 4 ist zum leichteren Ausführen der Drehbewegung mit einer Rücknahme versehen, die das Einführen in die Endposition erleichtert.

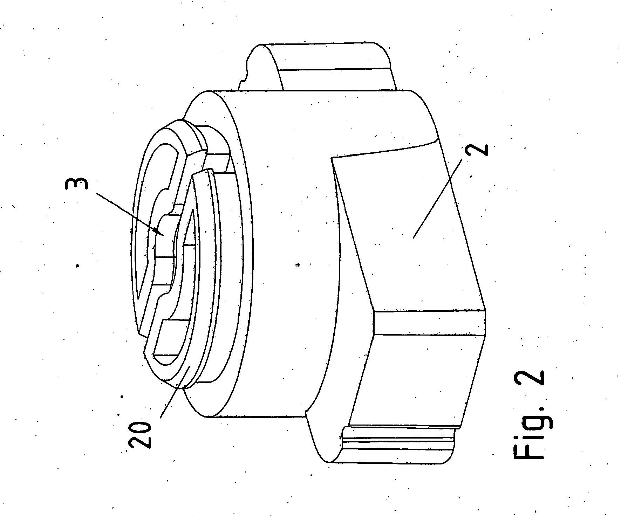

In der Figur 2 ist der Drehraster 2 von unten gezeigt. Dabei ist der Schlitz 3 zum Einführen des Schraubendrehers gezeigt. Außerdem sind die hervor ragenden Federraster 20 gezeigt, die gegeneinander etwas elastisch auslenkbar sind. Somit ist der Drehraster 2 in eine Bohrung des Kabelkanalhalters 1 einsteckbar.

In der Figur 3 ist eine Profilschiene 40 mit Kabelkanalhalter 1 und Kabelkanälen (31,32) vor dem Einrasten im Querschnitt gezeigt.

Der Primärleiter besteht aus Hinleitung und Rückleitung.

Der Kabelkanal 31 ist jeweils zur Aufnahme eines Rückleiters vorgesehen.

Der Kabelkanal 32 ist jeweils zur Aufnahme eines oder mehrerer Hinleiter vorgesehen und weist hierzu einen Aufnahmebereich 33 auf, in dem ein, zwei oder mehrere Hinleiter übereinander anordenbar sind. Die Hinleiter sind beispielhaft parallel beschaltbar.

Ebenso weisen die Kabelkanäle 31 einen Aufnahmebereich 36 für jeweils einen oder mehrere Rückleiter auf.

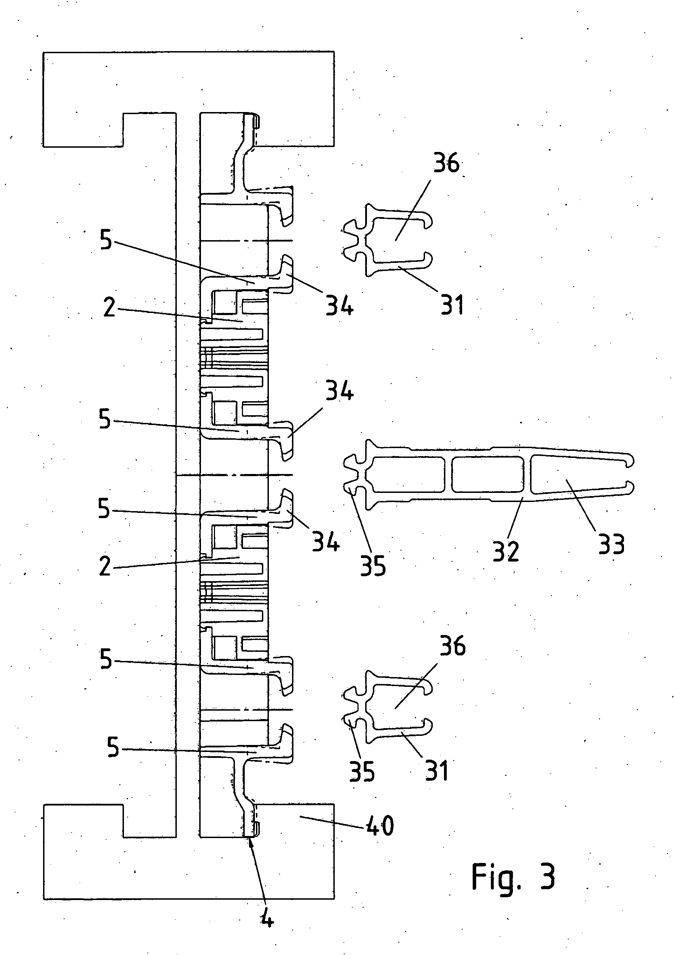

Die Rastnasen 34 am Raster 5 werden in pilzkopfförmige Vorsprünge 35 vorteiligerweise werkzeuglos eingeklipst, die in Figur 3 im nicht ausgelenkten und ausgelenkten Zustand gezeichnet sind, und durch den Kabelkanalhalter kraftschlüssig, insbesondere in Schienenrichtung, und formschlüssig gehalten. Der ausgelenkte Zustand wird durch das Drehen des Drehrasters 2 bewirkt und somit die Haltekraft verstärkt. Nach Einschnappen der Kerbe 6 an der Nase 7 ist der Drehraster selbst verriegelt und verhindert dann die Federwirkung des Rasters 5. Somit ist unbeabsichtigtes Öffnen verhindert, also Herausziehen der Kabelkanäle.

In Figur 4 ist der Kabelkanalhalter 1 bei der Drehbewegung innerhalb der Nuten der Profilschiene 40 gezeigt. Die Drehbewegung ist werkzeuglos ausführbar. Somit wird die Verbindung mit der Profilschiene werkzeuglos, also mit bloßer Hand, erzeugbar. Nach dem Einrasten des Kabelkanalhalters in der Profilschiene bildet das Komplettsystem, umfassend auch die Kabelkanäle eine formschlüssige Verbindung.

In Figur 5a sind die Nuten 50 deutlich zu sehen, an deren Nutgrund 50 die Berührkontur 4 in Eingriff ist.

Die Profilschiene ist vorteiligerweise als Aluminium-Strangpressguss fertigbar.

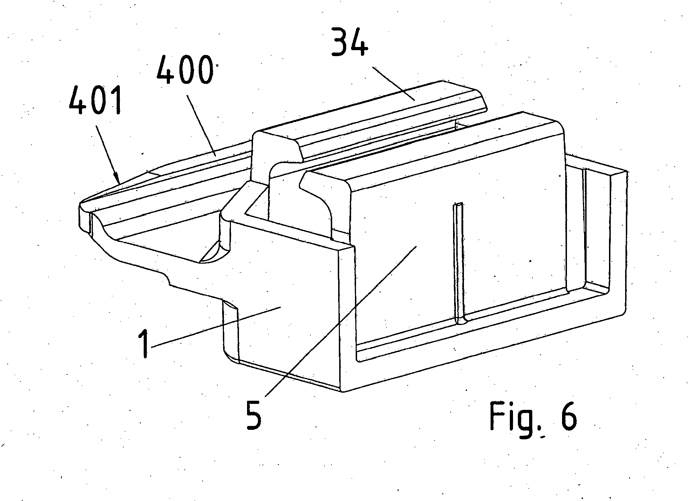

Bei weiteren erfindungsgemäßen Ausführungsbeispielen erfolgt nach Beendigung der Drehbewegung des Kabelkanalhalters in die Nut der Profilschiene hinein die Verspannung durch die Fläche 4 und 400 oder nur mit der Fläche 400. Dabei ist dann die Fläche 400 gegen die Nutwand verspannt, deren Normalenrichtung parallel ist zur Normalenrichtung des Schienenbodens, an der Raster und Drehraster angeordnet sind. Um die hierzu nötige Federwirkung zu erreichen, ist der Endbereich des Kabelkanalhalters zur jeweiligen Nut hin auskragend ausgeführt. Auf diese Weise ist in der Normalenrichtung Federkraft erzeugbar. Figur 6 zeigt für ein solches Ausführungsbeispiel einen herausgeschnittenen vergrößerten Bereich des Kabelkanalhalter. Dort ist die Fläche 400 mit nach der Erfindung zugehöriger Fase 401 deutlich zu sehen, die das Ausführen der Drehbewegung beim Eintreten in die Nut erleichtert. An der Fläche 400 greift die Kraft in Normalenrichtung an, da hier Berührung mit der Nutseitenwand vorliegt.

### Bezugszeichenliste

1 Kabelkanalhalter
2 Drehraster
3 Schlitz
4 Berührkontur
5 Raster
6 Kerbe
7 Nase
20 Federraster
31 Kabelkanal für Rückleiter
32 Kabelkanal für Hinleiter
33 Aufnahmebereich für Hinleiter
34 Rastnase
35 pilzkopfförmiger Vorsprung
36 Aufnahmebereich für Rückleiter
40 Profilschiene
50 Nutgrund
400 Fläche
401 Fase

## Patentansprüche

1. System zum Halten von Kabeln, wobei Kabel in Kabelkanälen (31,32) vorsehbar sind, **wobei** die Kabelkanäle formschlüssig mit Kabelkanalhaltern (1) verbindbar sind, wobei die Kabelkanalhalter (1) mit einer Profilschiene (40) verbindbar sind, mittels zweier gegenüberliegenden Oberflächenbereichen, insbesondere Berührkonturen (4), mit Nutgründen und/oder Nutseitenwänden von Nuten der Profilschiene (40) in Berührung stehen und jeweils Raster (5) umfassen, in welche die Kabelkanäle einklipsbar sind **dadurch gekennzeichnet, dass** der jeweilige Oberflächenbereich eine entsprechende Fase (401) aufweist zur Erleichterung der Drehbewegung der Oberflächenbereiche in den Bereich der Nut.

2. System nach Anspruch 1,
**dadurch gekennzeichnet, dass**
die Profilschiene (40) eine EHB-Schiene ist.

3. System nach mindestens einem der vorangegangenen Ansprüche,
**dadurch gekennzeichnet, dass**
die Kabelkanalhalter (1) mit der Profilschiene (40) durch Drehbewegung in einen formschlüssigen Verbindungszustand mit der Profilschiene (40) bringbar sind.

4. System nach mindestens einem der vorangegangenen Ansprüche,
**dadurch gekennzeichnet, dass**
der jeweilige Oberflächenbereich gerade ausgeführt ist, insbesondere flach, und benachbarte Bereiche derart ausgeführt sind, dass bei der Drehbewegung des Kabelkanalhalters (1) dieser gerade Bereich im Wesentlichen gleichzeitig zum Anliegen am Nutgrund (50) kommt.

5. System nach mindestens einem der vorangegangenen Ansprüche,
**dadurch gekennzeichnet, dass**
die Kabelkanalhalter (1) jeweils Drehraster (2) umfassen, die verriegelbar sind.

6. System nach mindestens einem der vorangegangenen Ansprüche,
**dadurch gekennzeichnet, dass**
die Kabelkanalhalter (1) jeweils Drehraster (2) umfassen, die mittels Drehbewegung ein Auslenken von Rastern (5) der Kabelkanalhalter (1) bewirken.

7. System nach mindestens einem der vorangegangenen Ansprüche,
**dadurch gekennzeichnet, dass**
Primärleitungen in die Kabelkanäle formschlüssig einlegbar und gehalten sind.

8. System nach mindestens einem der vorangegangenen Ansprüche,
**dadurch gekennzeichnet, dass**
die Profilschiene (40) aus Metall gefertigt ist, insbesondere aus Strangguss oder Aluminium Strangguss.

9. System nach mindestens einem der vorangegangenen Ansprüche 5 - 8,
**dadurch gekennzeichnet, dass**
Kabelkanäle, Kabelkanalhalter (1) und Drehraster (2) aus Kunststoff gefertigt sind, wobei sie als Kunststoffspritzgussteile oder als Ziehprofile hergestellt sind.

10. System nach mindestens einem der vorangegangenen Anspruche 5 - 9,
**dadurch gekennzeichnet, dass**
mittels der Drehraster (2) zwei aufeinander folgende Raster (5) gegeneinander derart verspannbar sind, dass die kraftschlüssig mit den Rastern (5) verbundenen Kabelkanäle in den Rastern (5) der Kabelkanalhalter (1) formschlüssig gehalten sind, zumindest in anderen Richtungen als Schienenrichtung,
insbesondere wobei die Drehraster (2) verrastbar sind an einem Vorsprung, insbesondere Nase (7), der Raster (5).

11. System nach mindestens einem der vorangegangenen Ansprüche,
**dadurch gekennzeichnet, dass**
die Primärleiter mittelfrequenten Wechselstrom führen,
insbesondere wobei der mittelfrequente Wechselstrom 10 Ampere übersteigt und eine Frequenz zwischen 10 und 100 kHz aufweist.

## Claims

1. System for holding cables, cables being providable in cable ducts (31, 32), the cable ducts being connectable in a form-locking manner to cable duct holders (1), the cable duct holders (1) being connectable to a profile rail (40) by means of two opposite surface regions, in particular contact contours (4), in contact with groove bases and/or groove sidewalls of grooves of the profile rail (40), and respectively comprising latches (5), into which the cable ducts are clippable,
**characterised in that**
the respective surface region has a corresponding chamfer (401) for facilitating the rotary movement of the surface regions into the region of the groove.

2. System according to claim 1,
**characterised in that**
the profile rail (40) is a suspended-monorail rail.

3. System according to at least one of the preceding claims,
**characterised in that**
the cable duct holders (1) with the profile rail (40) are bringable into a form-locking connection state with the profile rail (40) by rotary movement.

4. System according to at least one of the preceding claims,
**characterised in that**
the respective surface region is of straight form, in particular flat, and adjacent regions are formed in such a manner that this straight region comes substantially simultaneously to bear against the groove base (50) upon the rotary movement of the cable duct holder (1).

5. System according to at least one of the preceding claims,
**characterised in that**
the cable duct holders (1) comprise respective rotary latches (2) which are lockable.

6. System according to at least one of the preceding claims,
**characterised in that**
the cable duct holders (1) comprise respective rotary latches (2) which cause a deflection of latches (5) of the cable duct holders (1) by means of rotary movement.

7. System according to at least one of the preceding claims,
**characterised in that**
primary lines are insertable and held in a form-locking manner in the cable ducts.

8. System according to at least one of the preceding claims,
**characterised in that**
the profile rail (40) is produced from metal, in particular from continuous casting or aluminium continuous casting.

9. System according to at least one of the preceding claims 5-8,
**characterised in that**
cable ducts, cable duct holders (1) and rotary latches (2) are produced from plastic, these being manufactured as plastic-injection-moulded parts or as drawn profiles.

10. System according to at least one of the preceding claims 5-9,
**characterised in that**
two successive latches (5) are braceable relative to one another by means of the rotary latches (2) in such a manner that the cable ducts connected in a force-locking manner to the latches (5) are held in a form-locking manner in the latches (5) of the cable duct holders (1), at least in other directions than the rail direction,
in particular the rotary latches (2) being latchable to a projection, in particular lug (7), of the latches (5).

11. System according to at least one of the preceding claims,
**characterised in that**
the primary conductors carry centre-frequency alternating current,
in particular the centre-frequency alternating current exceeding 10 amps and having a frequency between 10 and 100 kHz.

## Revendications

1. Système de maintien de câbles
dans lequel des câbles peuvent être préalablement logés dans des goulottes passe-câbles (31,32),
lesdites goulottes passe-câbles pouvant être reliées à des supports (1) par complémentarité de formes,
sachant que lesdits supports (1) des goulottes passe-câbles peuvent être reliés à un rail profilé (40), sont en contact, au moyen de deux zones de surface opposées et notamment de profilages de contact (4), avec des fonds et/ou des parois latérales de rainures dudit rail profilé (40), et sont respectivement pourvus de pièces de crantage (5) dans lesquelles lesdites goulottes passe-câbles peuvent être clipsées,
**caractérisé par le fait que**
la zone de surface considérée est munie d'un biseau correspondant (401), en vue de faciliter le mouvement rotatoire des zones de surfaces jusque dans la région de la rainure.

2. Système selon la revendication 1,
**caractérisé par le fait que**
le rail profilé (40) est un rail pour agencements à suspension monorail.

3. Système selon au moins l'une des revendications précédentes,
**caractérisé par le fait que**
les supports (1) des goulottes passe-câbles peuvent être amenés, par mouvement rotatoire, à un état de liaison par complémentarité de formes avec le rail profilé (40).

4. Système selon au moins l'une des revendications précédentes,
**caractérisé par le fait que**
la zone de surface considérée est de réalisation rectiligne, notamment aplatie, et des zones voisines sont réalisées de façon telle que cette zone rectiligne vienne en applique contre le fond (50) de la rainure, au cours du mouvement rotatoire du support (1) de goulotte passe-câbles, pour l'essentiel de manière simultanée.

5. Système selon au moins l'une des revendications précédentes,
**caractérisé par le fait que**
les supports (1) des goulottes passe-câbles sont respectivement dotés de pièces rotatives de crantage (2) aptes au verrouillage.

6. Système selon au moins l'une des revendications précédentes,
**caractérisé par le fait que**
les supports (1) des goulottes passe-câbles sont respectivement dotés de pièces rotatives de crantage (2) provoquant, par mouvement rotatoire, une déviation de pièces de crantage (5) desdits supports (1) des goulottes passe-câbles.

7. Système selon au moins l'une des revendications précédentes,
**caractérisé par le fait que**
des conducteurs primaires peuvent être insérés et retenus dans les goulottes passe-câbles, par complémentarité de formes.

8. Système selon au moins l'une des revendications précédentes,
**caractérisé par le fait que**
le rail profilé (40) est fabriqué en métal, notamment à partir d'une pièce extrudée ou d'une pièce extrudée en aluminium.

9. Système selon au moins l'une des revendications 5-8 précédentes,
**caractérisé par le fait que**
les goulottes passe-câbles, les supports (1) desdites goulottes passe-câbles et les pièces rotatives de crantage (2) sont fabriqués en matière plastique, en étant produits sous la forme de pièces en matière plastique moulées par injection, ou de profilés venus d'extrusion.

10. Système selon au moins l'une des revendications 5-9 précédentes,
**caractérisé par le fait que**
deux pièces de crantage (5), en succession mutuelle, peuvent être bloquées l'une par rapport à l'autre au moyen des pièces rotatives de crantage (2), de telle sorte que les goulottes passe-câbles, reliées auxdites pièces de crantage (5) par engagement positif, soient retenues par complémentarité de formes dans les pièces de crantage (5) des supports (1) desdites goulottes passe-câbles, au moins dans des directions autres que la direction du rail,
sachant notamment que lesdites pièces rotatives de crantage (2) peuvent être encliquetées sur une protubérance, en particulier un listel (7) desdites pièces de crantage (5).

11. Système selon au moins l'une des revendications précédentes,
**caractérisé par le fait que**
les conducteurs primaires conduisent un courant alternatif de moyenne fréquence, sachant notamment que ledit courant alternatif de moyenne fréquence est supérieur à 10 ampères, et présente une fréquence comprise entre 10 et 100 kHz.
